(19) Europäisches Patentamt
European Patent Office
Office européen des brevets

(11) Veröffentlichungsnummer: **0 074 073**
**A1**

# (12) EUROPÄISCHE PATENTANMELDUNG

(21) Anmeldenummer: 82108025.6

(22) Anmeldetag: 01.09.82

(51) Int. Cl.$^3$: **C 08 G 59/68**
C 08 G 59/70

(30) Priorität: 09.09.81 DE 3135636

(43) Veröffentlichungstag der Anmeldung: 16.03.83 Patentblatt 83/11

(84) Benannte Vertragsstaaten: BE CH DE FR GB IT LI NL

(71) Anmelder: BASF Aktiengesellschaft
Carl-Bosch-Strasse 38
D-6700 Ludwigshafen(DE)

(72) Erfinder: Demmler, Kurt, Dr.
Irisstrasse 8
D-6700 Ludwigshafen(DE)

(72) Erfinder: Ochs, Wolfram, Dr.
Hans-Willmann-Strasse 6
D-6706 Wachenheim(DE)

(54) **Härtbare Epoxidharze.**

(57) Die Erfindung betrifft eine härtbare Harzzusammensetzung aus

A. einem Epoxidharz,
B. einem Pyryliumsalz als Katalysator, sowie gegebenenfalls
C. einem Metallchelat oder Metallsalz als Cokatalysator.

Bevorzugte Pyryliumsalze sind solche der Formel

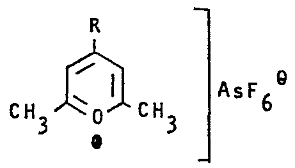

Bevorzugte Cokatalysatoren sind Acetylacetonate, Stearate, Benzoate, Naphthenate, Octoate oder Phthalate von $Cu^{++}$, $Co^{++}$, $Co^{+++}$, $Fe^{+++}$ oder $Al^{+++}$. Die Harzzusammensetzungen können zur Herstellung von Überzügen und Formkörpern verwendet werden.

EP 0 074 073 A1

Croydon Printing Company Ltd.

## Härtbare Epoxidharze

Epoxidharze werden üblicherweise mit Aminen, Phenolen, Carbonsäuren oder deren Anhydriden gehärtet. Wegen der hohen Reaktivität müssen die beiden Komponenten getrennt gehandhabt und nach dem Vermischen rasch verarbeitet werden.

Man hat auch schon Einkomponentensysteme entwickelt, bei denen dem Epoxidharz ein strahlungsempfindliches Oniumsalz zugesetzt und die Härtung des lagerfähigen und gut handhabbaren und verarbeitbaren Harzes durch Bestrahlung ausgelöst wird. In der Praxis wurden Jodoniumsalze eingesetzt, die aber stark toxisch sind. In der DE-A- 25 18 652 sind härtbare Zusammensetzungen aus einem Epoxidharz und einem strahlungsempfindlichen Oniumsalz eines Elements der 6. Hauptgruppe des Periodensystems beschrieben. Bei Verwendung der bevorzugten Sulfoniumsalze erhält man aber nach der Härtung Formkörper mit rauher oder matter Oberfläche und einer geringen Beständigkeit gegen Methylenchlorid. Außerdem stört bei der Abmischung und Verarbeitung der Harze der unangenehme Geruch der Sulfoniumsalze.

Der Erfindung lag daher die Aufgabe zugrunde, härtbare Epoxidharze zu entwickeln, die einen wirksamen Härtungs-Katalysator enthalten, gut lagerfähig, leicht handhabbar und verarbeitungsfähig und nicht toxisch sind, und die nach der Härtung Formkörper mit guter Oberfläche und Lösungsmittelbeständigkeit ergeben.

Diese Aufgabe wird gelöst, wenn man als Katalysatoren 0,5 bis 10, vorzugsweise 1 bis 8 Gew.-%, bezogen auf die Harzzusammensetzung, eines Pyryliumsalzes verwendet. Das Pyryliumsalz hat die Formel

Dd/P

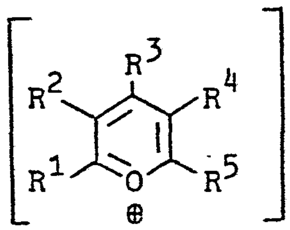

$X^{\ominus}$ (I)

Dabei ist $R^1 = R^5$ und bedeutet eine Alkyl- oder Alkarylgruppe mit 1 bis 8 Kohlenstoffatomen; $R^2$, $R^3$ und $R^4$ sind gleich oder verschieden und bedeuten Wasserstoff, eine Alkyl-, Alkaryl- oder Cycloalkylgruppe mit bis zu 8 Kohlenstoffatomen, eine gegebenenfalls alkyl-substituierte Phenyl-, Naphthyl-, Indenyl-, Indanyl- oder Fluorenyl-Gruppe oder einen heterocyclischen Substituenten mit einem oder zwei Heteroatomen. Die Substituenten $R^1$ bis $R^5$ stehen isoliert und sind nicht über Ringsysteme miteinander verbunden. Bevorzugt sind $R^1$ und $R^5$ Methylgruppen, $R^2$ und $R^4$ Wasserstoff und $R^3$ ist Phenyl, Naphthyl und Cyclohexyl.

$X^{\ominus}$ ist ein nicht nucleophiles, wenig basisches Anion, bevorzugt $AsF_6^{\ominus}$, $SbF_6^{\ominus}$, $BF_4^{\ominus}$, $PF_6^{\ominus}$, $CF_3SO_3^{\ominus}$ oder $ClO_4^{\ominus}$. Die bevorzugten Pyrylium-hexafluoroarsenate sind nicht toxisch. Sie emittieren bei ihrem Zerfall keine geruchsbelästigenden Spaltprodukte. Die Pyryliumsalze sind bekannt; ihre Herstellung ist z.B. beschrieben in A.V. Baeyer, Liebigs Annalen 384 (1911), S. 208.

Unter dem Begriff "Epoxidharze" sind monomere, dimere, oligomere und polymere Verbindungen mit end- oder seitenständigen sowie in cyclischen Systemen eingebauten Epoxidgruppen zu verstehen, wobei eine oder mehrere Epoxidgruppen im Molekül vorhanden sein können. Die Harze können auch

andere funktionelle Gruppen, wie Hydroxyl-, Carboxyl-, Anhydrid-, Ester-, Siloxan- oder Isocyanatgruppen enthalten. Bevorzugte Epoxidharze sind Umsetzungsprodukte von Bisphenol A, Novolak-Harzen, Diaminodiphenylmethan, p-Aminophenol, Isocyanurat oder Hydantoin mit Epichlorhydrin, sowie cycloaliphatische Epoxide und cycloaliphatische Epoxidester. Die Epoxidharze können die üblichen Verdünnungsmittel, wie z.B. Phenylglycidyläther, Glycidylacrylat oder -methacrylat, Styroloxid oder Allylglycidyläther als Viskositätsregler enthalten.

Bevorzugt enthält die erfindungsgemäße Harzzusammensetzung zusätzlich als Cokatalysator 0,01 bis 10 Gew.-%, vorzugsweise 0,1 bis 5 Gew.-% eines Metallchelats $C_1$ oder eines Metallsalzes $C_2$. Das Metallchelat $C_1$ hat die Formel

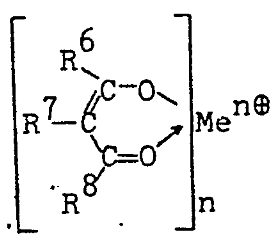

(II)

wobei Me ein ein- bis vierwertiges Metall ist, $R^7$ Wasserstoff, eine Alkyl-, Cycloalkyl-, Aryl- oder Alkaryl-Gruppe bis zu 8 Kohlenstoffatomen bedeutet, $R^6$ und $R^8$ gleich oder verschieden sind und eine Alkyl-, Cycloalkyl-, Aryl-, Aralkyl- oder Alkaryl-Gruppe mit bis zu 8 Kohlenstoffatomen bedeuten, wobei $R^6$ und $R^8$ auch durch ein Ringsystem miteinander verbunden sein können, und n eine ganze Zahl zwischen 1 und 4 ist. Als Metallionen kommen z.B. $Ti^{4+}$, $Zn^{2+}$, $Zr^{4+}$, $Ba^{2+}$, $Ca^{2+}$, $Ce^{4+}$, $Cr^{3+}$, $Pb^{2+}$, $Mg^{2+}$, $Sn^{4+}$, $Nn^{2+}$, $Ni^{2+}$, $V^{3+}$ und $V^{4+}$ in Frage; bevorzugt sind $Al^{3+}$, $Cu^{2+}$, $Fe^{3+}$, $Co^{2+}$ und $Co^{3+}$. Bevorzugte Metallchelate sind die Acetylacetonate.

Die Metallsalze $C_2$ sind Salze ein- bis vierwertiger Metalle mit aliphatischen oder aromatischen Mono- oder Polycarbonsäure mit 6 bis 20 Kohlenstoffatomen. Als Metalle kommen die oben genannten in Frage; bevorzugt sind Stearate, Benzoate, Naphthenate, Octoate oder Phthalate von $Cu^{2+}$, $Co^{2+}$, $Co^{3+}$, $Fe^{3+}$ und $Al^{3+}$.

Die Cokatalysatoren können als Substanz oder in Form von Lösungen, z.B. in Kohlenwasserstoffen eingesetzt werden. Man kann auch Mischungen von Metallchelaten $C_1$ und Metallsalzen $C_2$ verwenden. Durch Zusatz der Cokatalysatoren kann die Temperatur, bei der die Härtung einsetzt (Ansprechtemperatur) und die Härtungszeit herabgesetzt werden. In vielen Fällen wird auch die Lagerstabilität der Harze erhöht.

Die härtbaren Harzzusammensetzungen werden durch Vermischen des Epoxidharzes A mit dem Katalysator B und gegebenenfalls einem Cokatalysator $C_1$ oder $C_2$ hergestellt. Die Mischung kann mit Verdünnungsmitteln modifiziert sowie mit Verstärkungsmaterialien, Füllstoffe, Farbstoffen, Pigmenten, Verarbeitungshilfsmitteln oder anderen üblichen Zusatzstoffen vermischt werden. Die Mischung wird in eine geeignete Form gebracht, z.B. als dünner Film ausgegossen. Zur Härtung wird das Harz auf Temperaturen zwischen 80° und 160°C, vorzugsweise zwischen 100° und 150°C erhitzt.

Nach 0,5 bis 20 Minuten ist der Härtungsprozeß im allgemeinen beendet. Die bei der Härtung entstehenden Formkörper weisen eine glatte, glänzende Oberfläche auf. Ihre Glastemperatur liegt - nach einstündiger Nachhärtung bei 200°C - zwischen 170° und 190°C. Sie haben eine hohe Vernetzungsdichte, ihr Schubmodul G' im kautschukelastischen Bereich erreicht Werte zwischen 40 und 50 $N.mm^{-2}$. Die Formkörper

haben eine gute Lösungsmittelbeständigkeit, bei der Lagerung in Methylenchlorid werden sie nicht angegriffen.

Die erfindungsgemäßen härtbaren Zusammensetzungen können z.B. zur Herstellung von schützenden und isolierenden Überzügen, Einbettmassen oder als Matrix für verstärkte Formkörper verwendet werden.

## Beispiele

Es wurden Harzmischungen hergestellt aus einem Bisphenol-A-diglycidyläther (®Epon 828 der SHELL), 2,4 Gew.-% Katalysator und gegebenenfalls 1 Gew.-% Cokatalysator. Jeweils gleiche Gewichtsmengen Harzmischung wurden in zylindrische Formen gegossen, welche in ein auf 120°C, 130°C bzw. 140°C vorgeheiztes Ölbad getaucht wurden. Zur Temperaturkontrolle wurden die Proben mit einem Thermoelement versehen. Es wurde eine Temperatur/Zeit-Kurve aufgezeichnet. Aus dieser ist der Beginn der exothermen Vernetzungsreaktion (Angleichung der Probentemperatur an die Badtemperatur), die zugehörige Ansprechtemperatur und die Maximaltemperatur ersichtlich. Die Zeit zwischen dem Beginn der Vernetzungsreaktion und dem Erreichen der Maximaltemperatur stellt die Härtungszeit dar.

Die Ergebnisse sind in der Tabelle 1 aufgezeichnet.

Tabelle 1

| Beispiel | Pyryliumsalz | | Cokatalysator | Ansprechtemp. °C | Maximaltemp. °C | Härtungszeit min. |
|---|---|---|---|---|---|---|
| 1 | 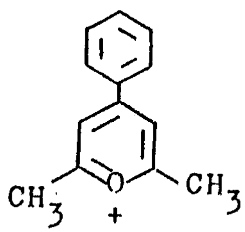 | $AsF_6^-$ | - | 140 | 254 | 14 |
| 2 | " | $ClO_4$ | - | 160 | 180 | 10 |
| 3 | " | $AsF_6^-$ | $Cu^{2+}$-ac.ac. | 120 | 238 | 5 |
| 4 | " | " | $Cu^{2+}$-naphthenat | 120 | 180 | 10,5 |
| 5 | " | " | $Cu^{2+}$-stearat | 120 | 148 | 15 |
| 6 | " | " | $Fe^{3+}$-ac.ac. | 120 | 198 | 5,5 |
| 7 | " | " | $Co^{3+}$-ac.ac. | 120 | 206 | 10 |
| 8 | " | " | $Al^{3+}$-ac.ac. | 120 | 207 | 7,5 |
| 9 | " | " | 0,5 $Cu^{2+}$-ac.ac.<br>0,5 $Cu^{2+}$-naphthenat | 120 | 216 | 6 |

0074073

Forts. Tab. 1

| Beispiel | Pyryliumsalz | Cokatalysator | Ansprechtemp. °C | Maximaltemp. °C | Härtungszeit min. |
|---|---|---|---|---|---|
| 10 | 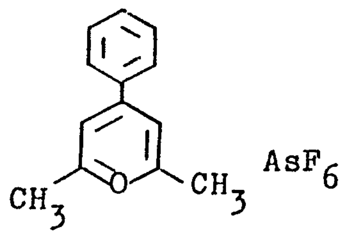 | - | 150 | 258 | 11 |
| 11 | " " | $Cu^{2+}$-ac.ac. | 120 | 223 | 8 |
| 12 | " " | $Cu^{2+}$-naphthenat | 120 | 210 | 5,5 |
| 13 | " " | 0,5 $Cu^{2+}$-ac.ac.<br>0,5 $Cu^{2+}$-naphthenat | 120 | 242 | 5 |

Forts. Tab. 1

| Beispiel | Pyryliumsalz | | Cokatalysator | Ansprechtemp. °C | Maximaltemp. °C | Härtungszeit min. |
|---|---|---|---|---|---|---|
| 14 | 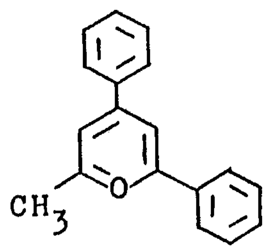 | $AsF_6$ | - | 160 | 200 | 5 |
| 15 | " | $CF_3SO_3$ | - | 120 | 280 | 13 |
| 16 | " | $AsF_6$ | $Cu^{2+}$-ac.ac. | 120 | 190 | 5 |
| 17 | 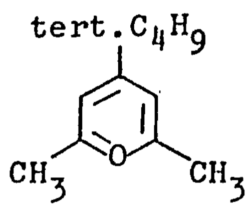 | $AsF_6$ | $Cu^{2+}$-ac.ac. | 140 | 264 | 7 |
| 18 | 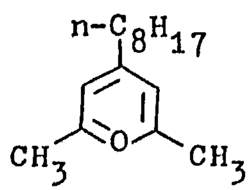 | $AsF_6$ | $Cu^{2+}$-ac.ac. | 130 | 238 | 9 |

0074073

Forts. Tab. 1

| Beispiel | Pyryliumsalz | Cokatalysator | Ansprechtemp. °C | Maximaltemp. °C | Härtungszeit min. |
|---|---|---|---|---|---|
| 19 | 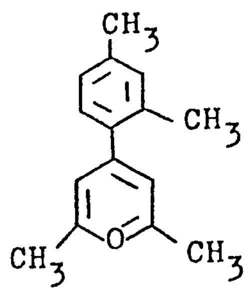 $AsF_6$ | $Cu^{2+}$-ac.ac. | 120 | 190 | 12 |
| 20 | 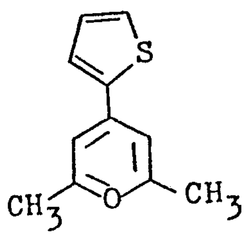 $AsF_6$ | $Cu^{2+}$-ac.ac. | 120 | 233 | 10 |

Forts. Tab. 1

| Beispiel | Pyryliumsalz | Cokatalysator | Ansprechtemp. °C | Maximaltemp. °C | Härtungszeit min. |
|---|---|---|---|---|---|
| 21 | 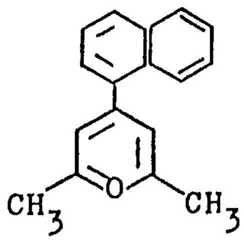 $AsF_6$ | $Cu^{2+}$-ac.ac. | 120 | 263 | 5 |
| 22 | 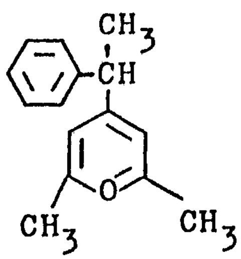 $AsF_6$ | $Cu^{2+}$-ac.ac. | 120 | 180 | 9 |

Bei einigen Beispielen wurde an den Formkörpern folgende Eigenschaften gemessen:

Die Glastemperatur und die Vernetzungsdichte wurden durch Torsionsschwingungsversuche nach DIN 53 445 an Probekörpern bestimmt, die aus gegossenen Platten herausgefräst wurden, die nach der Vernetzung eine Stunde bei 200°C nachgehärtet worden waren. Als Maß für die Vernetzungsdichte dient die Höhe der Schubmodulkurve im kautschukelastischen Bereich. Für Quellungsmessungen wurden Würfel der Kantenlänge 1 cm aus nachgehärteten Formkörpern herausgeschnitten und 120 Stunden bei 20°C sowie 3 h in siedendem Methylenchlorid gelagert. Die Quellung wurde als Mittelwert aus fünf Messungen ermittelt.

Ergebnisse siehe Tabelle 2

<u>Tabelle 2</u>

| Beispiel | Glastemperatur $T_g$ [°C] | Schubmodul G' [$N \cdot mm^{-2}$] | Quellung in $CH_2Cl_2$ [%] 20°, 120 h | 40°, 3 h |
|---|---|---|---|---|
| 3 | 186 | 46 | 11 | 3 |
| 6 | 183 | 50 | 11 | 3 |
| 7 | 183 | 43 | 11 | 3 |
| 11 | 185 | 45 | 5 | 2 |

Patentansprüche

1. Härtbare Harzzusammensetzung, enthaltend

A. ein kationisch polymerisierbares Epoxidharz, und
B. 0,5 bis 10 Gew.% eines Oniumsalzes als Härtungskatalysator,

dadurch gekennzeichnet, daß der Katalysator ein Pyryliumsalz der Formel

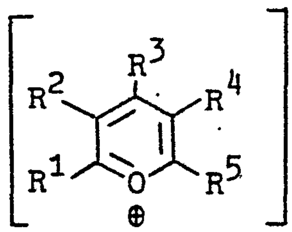 $X^{\ominus}$ ist, (I)

wobei $R^1 = R^5$ ist und eine Alkyl- oder Alkarylgruppe mit 1 bis 8 Kohlenstoffatomen bedeutet; $R^2$, $R^3$ und $R^4$ gleich oder verschieden sind und Wasserstoff eine Alkyl-, Alkaryl- oder Cycloalkyl-Gruppe mit jeweils bis zu 8 Kohlenstoffatomen, eine gegebenenfalls alkylsubstituierte Phenyl-, Naphthyl-, Indenyl-, Indanyl- oder Fluorenyl-Gruppe oder ein heterocyclischer Substituent mit ein oder zwei Heteroatomen bedeutet; und $X^{\ominus}$ ein nicht nucleophiles Anion ist.

2. Härtbare Harzzusammensetzung nach Anspruch 1, dadurch gekennzeichnet, daß sie zusätzlich

$C_1$. 0,01 bis 10 Gew.% eines Metallchelats der Formel

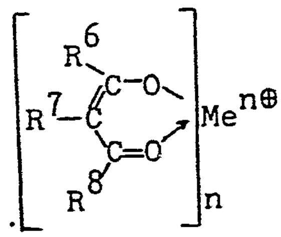

(II)

enthält, wobei Me ein ein- bis vierwertiges Metall ist, $R^7$ Wasserstoff, eine Alkyl-, Cycloalkyl-, Aryl- oder Alkaryl-Gruppe mit bis zu 8 Kohlenstoffatomen bedeutet, $R^6$ und $R^8$ gleich oder verschieden sind und eine Alkyl-, Cycloalkyl-, Aryl-, Aralkyl- oder Alkaryl-Gruppe mit jeweils bis zu 8 Kohlenstoffatomen bedeuten, wobei $R^6$ und $R^8$ auch durch ein Ringsystem miteinander verbunden sein können, und n eine ganze Zahl zwischen 1 und 4 ist.

3. Härtbare Harzzusammensetzung nach Anspruch 1, dadurch gekennzeichnet, daß sie zusätzlich

$C_2$. 0,01 bis 10 Gew.% eines Metallsalzes einer aliphatischen oder aromatischen Mono- oder Polycarbonsäure mit 6 bis 20 Kohlenstoffatomen enthält.

4. Härtbare Harzzusammensetzung nach Anspruch 1, dadurch gekennzeichnet, daß der Katalysator ein Pyryliumsalz der Formel

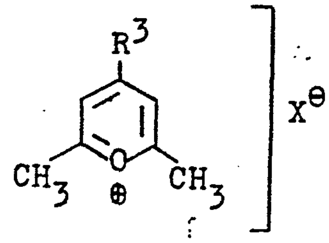

ist,

wobei $R^3$ die in Anspruch 1 angegebene Bedeutung hat, und $X^{\ominus}$ = $AsF_6^{\ominus}$, $BF_4^{\ominus}$, $SbF_6^{\ominus}$, $PF_6^{\ominus}$, $CF_3SO_3^{\ominus}$ oder $ClO_4^{\ominus}$ ist.

5. Härtbare Harzzusammensetzung nach Anspruch 2, dadurch gekennzeichnet, daß das Metallchelat ein Acetylacetonat von $Cu^{++}$, $Co^{++}$, $Co^{+++}$, $Fe^{+++}$ oder $Al^{+++}$ ist.

6. Härtbare Harzzusammensetzung nach Anspruch 3, dadurch gekennzeichnet, daß das Metallsalz ein Stearat, Benzoat, Naphthenat, Octoat oder Phthalat von $Cu^{++}$, $Co^{++}$, $Co^{+++}$, $Fe^{+++}$ oder $Al^{+++}$ ist.

7. Verfahren zur Herstellung von Formkörpern aus der Harzzusammensetzung nach Anspruch 1, dadurch gekennzeichnet, daß man ein Epoxidharz A mit dem Katalysator B und gegebenenfalls einem Cokatalysator $C_1$ oder $C_2$ innig vermischt und die Mischung auf Temperaturen von 80°C bis 160°C erwärmt.

**0074073**
Nummer der Anmeldung

Europäisches Patentamt

# EUROPÄISCHER RECHERCHENBERICHT

EP 82 10 8025.6

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| P,X | RESEARCH DISCLOSURE, Nr. 211<br>November 1981<br>Seiten 398 bis 399<br>* Artikel Nr. 21114 "Photoinitiation of cationic polymerisation by triaryl pyrylium salts and triaryl thiopyrylium salts" *<br>-- | 1 | C 08 G 59/68<br>C 08 G 59/70 |
| A | Chemical Abstracts Band 87, Nr. 10<br>5. September 1977<br>Columbus, Ohio, USA<br>T. YAMAOKA et al. "A study on phenoxy-resin esters of cinnamylideneacetic acid and its derivatives"<br>Seite 13, Spalte 1, Abstract Nr. 68833a<br>& Polymer, Band 18, Nr. 1, 1977, Seiten 81 bis 86<br>-- | 1 | RECHERCHIERTE SACHGEBIETE (Int Cl.³)<br><br>C 08 G 59/00 |
| A | US - A - 4 238 587 (J.V. CRIVELLO)<br>* Spalte 1, Zeile 41 bis Spalte 3, Zeile 58; Spalte 6, Zeilen 14 bis 30; Beispiele 1, 4 *<br>-- | 2-7 | |
| A | DE - A - 2 019 816 (MORTON INTERNATIONAL INC.)<br>* Ansprüche 2, 5, 6 *<br>-- | 2,5 | KATEGORIE DER GENANNTEN DOKUMENTE<br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| A | CH - A - 430 201 (S.A. ARGUS CHEMICAL N.V)<br>* Spalte 2, Zeilen 10 bis 34 *<br>---- | 3,6 | &: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 02-12-1982 | IDEZ |